# FASCICULE DE BREVET EUROPEEN

(11) **EP 3 302 798 B1**
(45) Date de publication et mention de la délivrance du brevet: **15.01.2020**
(21) Numéro de dépôt: 16730728.9
(22) Date de dépôt: 03.06.2016
(51) Int. Cl.: B01J 38/72, B01J 35/00, B01J 23/882, B01J 23/883, B07C 5/342, B07C 5/36, B01J 23/888, B01J 27/19, B01J 29/40, G01N 21/71, G01N 21/85, B01J 38/00, B01J 23/94, B01J 21/20, B01J 27/185, B01J 27/28, B01J 29/90, G01J 3/443

(54) **PROCEDE POUR LE TRI COMPOSITIONNEL DE CATALYSEUR OU ADSORBANT DANS DES MELANGES DE CATALYSEURS ET/OU ADSORBANTS**
VERFAHREN ZUM KOMPOSITIONELLEN SORTIEREN VON KATALYSATOREN ODER ADSORPTIONSMITTELN IN MISCHUNGEN VON KATALYSATOREN UND/UND ADSORPTIONSMITTELN
METHOD FOR THE COMPOSITIONAL SORTING OF CATALYSTS OR ADSORBENTS IN MIXTURES OF CATALYSTS AND/OR ADSORBENTS

(30) Priorité: 05.06.2015 FR 1555165
(43) Date de publication de la demande: 11.04.2018
(73) Titulaire: IFP Energies nouvelles, 92500 Rueil-Malmaison (FR); EURECAT SA., 07800 La Voulte-sur-Rhône (FR)
(72) Inventeur: GAUTHIER, Thierry, 69530 Brignais (FR); LIENEMANN, Charles-Philippe, 38460 Villemoirieu (FR); WEISS, Wilfried, 38540 Valencin (FR); DUFRESNE, Pierre, 26000 Valence (FR); GALLIOU, Pauline, 07800 Saint Laurent Du Pape (FR)
(74) Mandataire: IFP Energies nouvelles
(86) Numéro de dépôt international: PCT/EP2016/062725
(87) Numéro de publication internationale: WO 2016/193479

(56) Documents cités:
- WO-A1-2015/082424
- US-A1- 2009 000 992
- Yamina Tayeb: "Le projet Trisur, lauréat du concours mondial d'innovation", La Tribune, 2 septembre 2014 (2014-09-02), XP055262244, Extrait de l'Internet: URL:http://acteursdeleconomie.latribune.fr /innovation/2014-09-02/le-projet-trisur-la ureat-du-concours-mondial-d-innovation.htm l [extrait le 2016-04-01]
- S. DAVESNE: "Encore 15 milliards à distribuer", L'USINE NOUVELLE, no. 3389, 11 septembre 2014 (2014-09-11), XP055262242,
- ASIMELLIS G ET AL: "Platinum group metals bulk analysis in automobile catalyst recycling material by laser-induced breakdown spectroscopy", SPECTROCHIMICA ACTA. PART B: ATOMIC SPECTROSCOPY, NEW YORK, NY, US, US, vol. 63, no. 11, 1 novembre 2008 (2008-11-01), pages 1338-1343, XP025685358, ISSN: 0584-8547, DOI: 10.1016/J.SAB.2008.09.016 [extrait le 2008-10-09]

## Description

L'invention concerne un procédé de séparation d'au moins un catalyseur d'un mélange homogène de catalyseurs, cette séparation étant fondée sur une détection de différence compositionnelle grâce à la technologie LIBS, et l'un au moins de ces catalyseurs est ensuite régénéré pour être réutilisé pour un nouveau cycle catalytique.

### ART ANTERIEUR

Il existe une grande variété de types de catalyseurs et d'adsorbants. Un tonnage important concerne les applications dans le domaine du raffinage pétrolier, de la pétrochimie, de la chimie, et du traitement de gaz naturel.

Les catalyseurs contiennent des éléments constitutifs (métaux) qui confèrent au catalyseur les propriétés catalytiques requises pour traiter certains flux gazeux ou coupes pétrolières, tels que Ni, Co, Mo, W notamment pour les catalyseurs d'hydrotraitement et d'hydroconversion, tels que Pd, Pt, Ni, Cu, Cr, notamment dans des procédés d'hydrogénation, de déshydrogénation, d'isomérisation, de reformage, d'hydroconversion.

Un des procédés de raffinage utilisant des catalyseurs est l'hydrotraitement ou hydroconversion (hydroprocessing), qui consiste à traiter des charges pétrolières pour soit les convertir en produits plus légers, soit les raffiner, c'est-à-dire les purifier.

Les catalyseurs d'hydrotraitement/hydrocraquage sont constitués d'une phase active de type sulfure de métaux Ni, Co, Mo ou W supportée sur alumine ou sur silice alumine. Ces catalyseurs sont utilisés dans des réacteurs sous pression d'hydrogène, lesquels contiennent de quelques dizaines à quelques centaines de tonnes de catalyseurs. Un réacteur contient toujours différents types de catalyseurs. Même s'ils sont en général de la même famille, à savoir contenant les métaux Ni, Co, Mo ou W, ils peuvent être de forme différente ou de composition différente.

La durée de cycle d'un réacteur catalytique d'hydrotraitement est de 1 à quelques années. A la fin d'un cycle, la performance des catalyseurs a tellement baissé que l'unité doit être arrêtée et les catalyseurs déchargés des réacteurs. Ensuite ils peuvent être traités en tant que déchet ou alors subir une régénération oxydante qui leur permet de retrouver des performances proches des produits neufs.

Aujourd'hui, seulement 20 % environ de ces catalyseurs d'hydrotraitement/hydrocraquage sont régénérés après expertise pour être ensuite réutilisés. Les 80 % restants deviennent des déchets traités pour récupération de métaux valorisables. Ce taux de régénération est faible, et cela occasionne des surcoûts pour la filière des utilisateurs et des pertes de métaux stratégiques, le recyclage des métaux s'effectuant toujours avec des rendements bien inférieurs à 100 %.

Les raisons de la non-régénérabilité des catalyseurs d'hydrotraitement sont au nombre de quatre.

La première est un frittage soit du support, soit de la phase active, et le catalyseur est considéré comme irrécupérable.

La seconde est la contamination : les catalyseurs sont pollués par des éléments véhiculés par la charge pétrolière. Il en est ainsi du vanadium, contenu dans les fractions lourdes du brut.

La troisième raison est qu'ils ont perdu une partie de leurs propriétés, en particulier des propriétés de résistance mécanique. Ainsi ils deviennent trop fragiles ou de forme inappropriée pour être réutilisés.

Ces trois raisons de non régénérabilité sont classiques et ne concernent pas que les hydrotraitements mais s'appliquent à beaucoup d'autres types de catalyseur.

Une quatrième raison concerne plus spécifiquement cette invention. Elle déborde aussi du champ des hydrotraitements de raffinerie.

La non-régénérabilité peut provenir du fait que plusieurs types de ces catalyseurs sont chargés dans un même réacteur, ceci pour optimiser la performance globale du réacteur, les catalyseurs ayant des activités ou sélectivités variées pour différentes réactions.

Or, pendant les opérations de déchargement des réacteurs en fin de cycle, les catalyseurs se retrouvent inévitablement mélangés les uns aux autres. En effet, même lorsque les catalyseurs sont chargés séparément selon des couches (lits ou des empilements) bien distincts, la vidange a pour effet de mélanger ces différentes couches, car l'expérience montre que le processus de vidange suit une loi de type sablier, et non une loi d'écoulement piston, résultant dans un mélange de toutes les couches de produits éventuellement différents.

Dans ce cas, les catalyseurs ne sont plus réutilisables, les utilisateurs exigeant de recharger des catalyseurs d'un type précis et non des mélanges. De tels mélanges sont considérés comme des déchets, dirigés vers des filières de recyclage pour récupération des métaux.

Par exemple, les réacteurs d'hydrotraitement sont souvent chargés de plusieurs types de catalyseurs ; ainsi, des noms commerciaux différents, des compositions différentes qui permettent des actions catalytiques différentes, par exemple des catalyseurs CoMo et NiMo (mélange de cobalt/nickel et molybdène et alumine), ou des catalyseurs NiMo/support alumine et des catalyseurs NiW (Nickel/Tungstène)/support alumine et zéolithe. S'ils ont des granulométries différentes, ils sont séparables par tri mécanique. S'ils ont la même granulométrie, et s'ils ont été chargés dans le même lit d'un même réacteur, ils seront déchargés en mélange. Ils ne sont pas alors réutilisables en mélange tel quel après régénération, et donc deviennent un déchet car aucune technique connue ne permet de les séparer.

Certains catalyseurs de déshydrogénation, contenant du chrome à hauteur de 10 à 25 % de Cr₂O₃ peuvent être utilisés non pas à l'état pur mais en mélange avec un produit inerte, non actif catalytiquement, typiquement une alumine, pour des raisons de balance thermique. Lorsque le catalyseur est usé, il est déchargé avec son diluant. Il est donc opportun de séparer le catalyseur contenant des métaux du diluant aluminique pour recycler de façon optimale le catalyseur.

C'est le problème soulevé par cette quatrième raison que l'invention se propose de résoudre.

Les articles "Le projet Trisur, lauréat du concours mondial d'innovation" de Yamina Tayeb, La Tribune (02-09-2014) et "Encore 15 milliards à distribuer" de Solène Davène, l'Usine Nouvelle (11-09-2014) décrivent l'utilisation de la technique LIBS pour le tri de catalyseurs contenant du Co ou du Mo ou du W.

La demande de brevet US2009/000992 décrit le tri de catalyseurs après traitement thermique sur la base de leur coloration après ledit traitement.

### DESCRIPTION DE L'INVENTION

L'invention concerne plus précisément un procédé de séparation d'au moins un catalyseur ou adsorbant d'un mélange homogène en taille et en forme de catalyseurs et/ou d'adsorbants, lesdits catalyseurs ou adsorbants se présentant sous la forme de billes ou d'extrudés cylindriques, trilobes ou multilobes, lesdits catalyseurs ayant été utilisés dans un procédé de traitement de gaz ou de charge hydrocarbonée, procédé dans lequel les grains de catalyseurs ou adsorbants sont séparés selon un seuil de tri correspondant à une teneur en ledit élément et défini par l'exploitant, procédé dans lequel :
- les grains de catalyseur dudit mélange passent devant un système de détection LIBS qui détecte la longueur d'onde caractérisant ledit élément constitutif,
- l'analyseur associé au LIBS traite le signal envoyé par le système de détection en le comparant à une valeur consigne significative du seuil de tri,
- l'analyseur envoie un signal pour commander l'évacuation des grains selon sa teneur en ledit élément et il est obtenu au moins 2 lots : au moins un lot de catalyseurs fortement chargés en ledit élément par rapport au seuil de tri et au moins un lot de catalyseurs peu chargés en ledit élément par rapport au seuil de tri,
- et l'un au moins des lots de catalyseurs peu chargés en ledit élément est recyclé dans ledit procédé de traitement de gaz ou de charge hydrocarbonée après une éventuelle régénération.

L'invention peut s'appliquer également à des adsorbants, ou des mélanges de catalyseurs et d'adsorbants

On entend par élément constitutif un élément de la composition du catalyseur ou de l'adsorbant à l'état frais (ou neuf), c'est-à-dire avant utilisation dans les procédés de traitement de gaz ou de charge hydrocarbonée.

L'invention est mise en œuvre lorsque le catalyseur à séparer contient comme élément constitutif un élément non-métallique, choisi dans le groupe formé par le phosphore, le bore, le lithium, le sodium, le potassium, le calcium, le chlore, le silicium et/ou contient l'aluminium, le titane ou le chrome, le cuivre, le zinc.

L'invention concerne plus spécifiquement un procédé permettant de trier des catalyseurs ou adsorbants contenant du phosphore d'autres catalyseurs ou adsorbants dépourvus de phosphore, ou ayant une teneur notablement plus faible en phosphore. L'invention concerne plus spécifiquement un procédé permettant de trier un catalyseur ou adsorbant contenant du bore d'autres catalyseurs ou adsorbants dépourvus de bore, ou ayant une teneur notablement plus faible en bore.

L'invention concerne plus spécifiquement un procédé permettant de trier un catalyseur ou adsorbant contenant une silice-alumine, amorphe ou cristallisée (zéolite), d'autres catalyseurs ou adsorbants dépourvus de silice-alumine. Dans ce cas, la détection compositionnelle peut s'effectuer sur l'élément Si contenu dans la fraction contenant la silice-alumine.

L'invention concerne plus spécifiquement un procédé permettant de trier un catalyseur contenant du chrome d'un mélange avec d'autres solides, catalytiques ou non, dépourvus de chrome. Ces autres solides peuvent être un diluant constitué essentiellement d'alumine, disposition qui se retrouve dans le lit de garde qui est en tête du réacteur, et qui comprend un ou des lits catalytique en aval du lit de garde.

L'invention concerne plus spécifiquement un procédé permettant de trier un catalyseur contenant un catalyseur d'hydrotraitement dit massique ou non supporté, contenant essentiellement des métaux à l'état oxyde ou sulfure (plus de 50% poids), d'autres catalyseurs supportés à teneur plus faible en métaux (moins de 30%). Dans le cas où le support du catalyseur supporté est de l'alumine, le tri compositionnel pourra s'effectuer sur l'élément Al.

Les catalyseurs sont utilisés dans des procédés de traitements de gaz de différentes compositions ou des traitements de charges hydrocarbonées. Parmi les traitements de gaz, on peut citer le procédé Claus, et traitements de gaz de queue. Pour les charges hydrocarbonées, on peut mentionner les catalyseurs utilisés dans les procédés d'hydrotraitement, d'hydrocraquage, d'hydroconversion de distillats, ainsi que des applications d'hydrogénation, de déshydrogénation, d'isomérisation, de reformage.

Le support généralement à base (ou est avantageusement constitué) d'alumine, de silice-alumine, d'oxyde de titane ; dans les catalyseurs d'hydrocraquage, d'hydroconversion, de la zéolite (silice-alumine cristallisée) peut être présente.

Selon l'invention, le temps de passage d'un grain devant le système de détection LIBS est inférieur à 50 ms (milliseconde), et de préférence inférieur à 10 ms

Le procédé selon l'invention permet de détecter et de trier un nombre de grains supérieur à 20 grains par seconde, de préférence supérieur à 50 grains par seconde, et même supérieur à 100 ou 200 grains/s et pouvant aller jusqu'à 1000 grains/s ou plus.

De façon préférée, les grains s'écoulent de façon à ce que leur espacement soit compris entre zéro et leur plus grande dimension caractéristique. La fréquence de mesure est comprise entre 1/t et 1/2t, t étant le temps de passage du grain devant le système de détection LIBS.

Avantageusement, l'espacement entre les grains est au maximum égal à leur plus grande dimension caractéristique. Cela permet de maximiser la quantité de matière traitée pour une vitesse d'écoulement des grains donnée

Avantageusement, le système de détection est placé de façon à ce que la profondeur du champ d'analyse au-dessus de la surface des moyens de transport soit comprise entre 1/3 et 3 fois la plus petite dimension caractéristique du grain.

L'objet de l'invention est de proposer, pour des catalyseurs ou adsorbants, qui sont des objets de forme homogène et bien définie (extrudés cylindriques, trilobes ou multilobes, billes), un procédé de tri s'appuyant sur le moyen de détection très rapide en ligne LIBS.

### Les catalyseurs ou adsorbants:

Les catalyseurs sont des objets bien définis en forme, en taille et en composition. Leur mélange est séparable selon l'invention lorsque ce mélange est homogène, et bien évidemment lorsque il y a une différence au niveau de(s) élément(s) constitutif(s) (présence ou non, teneur) et que cette différence est détectable par LIBS.

La longueur des extrudés présente une certaine distribution autour d'une valeur moyenne, ceci étant due à une certaine variabilité de longueur lors de la production des catalyseurs ou adsorbants, mais aussi à des phénomènes d'attrition et de casse des extrudés qui ont pour effet une certaine réduction de longueur. Dans la suite du texte, on appellera plus grande dimension caractéristique la longueur moyenne des extrudés.

Par plus petite dimension caractéristique d'une particule, on entend le diamètre pour une bille ou un extrudé cylindrique, ou encore le diamètre circonscrit tangent aux sommets des lobes pour un trilobe ou un multilobe. D'une manière générale, le terme diamètre sera utilisé dans l'ensemble du texte comme étant la plus petite dimension caractéristique quel que soit le type de particule.

Le diamètre des particules (ou grains) est en général bien défini et sa dispersion est en général faible par rapport à sa valeur moyenne.

### Le mélange homogène

Selon l'invention, les catalyseurs à trier se présentent sous forme d'un mélange homogène.

On entend par « mélange homogène » un mélange dans lequel les catalyseurs présentent une taille homogène et/ou une forme homogène. « Taille homogène » signifie que les diamètres sont très proches.

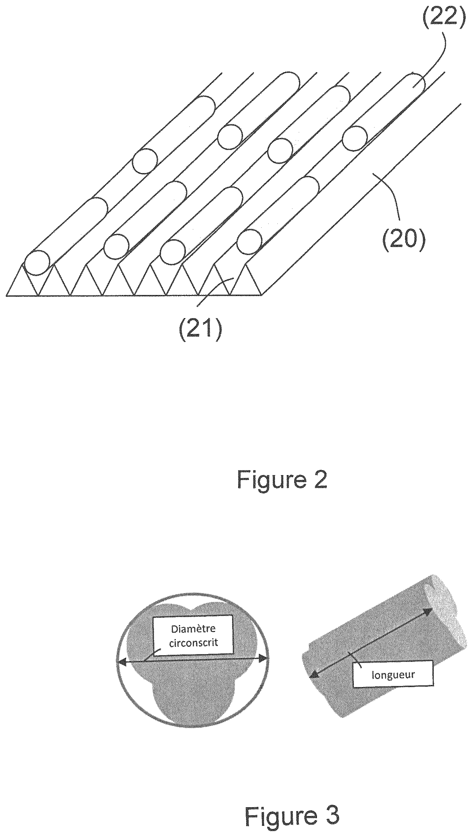

En général, le catalyseur présente une forme de billes ou d'extrudés cylindriques, trilobes ou quadrilobes ou multilobes de diamètre souvent compris entre 0.5 et 3 mm (souvent voisin de 0.9-1.5mm) et de longueur égale à 2 à 5 fois le diamètre des extrudés. Il peut être mis en forme sous forme de billes de 0.5 à 10 mm, préférentiellement comprises entre 0.5 et 5 mm de diamètre, ou de pastilles. Les catalyseurs peuvent aussi être utilisés sous la forme de poudres dispersées, dont le diamètre est en général inférieur à 200 microns, mais cette mise en forme ne concerne pas l'objet de l'invention. La figure 3 représente des formes de grains.

Il est à noter que ces formes présentent parfois des défauts inhérents au mode de production. Par exemple, des extrudés sont parfois légèrement courbés sur la longueur. Ces défauts sont acceptables dans la mise en œuvre du procédé selon l'invention.

Ce mélange homogène a pu être obtenu à l'issue d'une étape préalable de séparation (pré-tri) basée sur les propriétés physiques.

Ce pré-tri peut être opéré sur des catalyseurs ayant un diamètre différent.

Ce pré-tri peut aussi s'effectuer sur un mélange contenant des grains de diamètre analogue, mais pour lequel on voudra éliminer les particules trop courtes, lesquelles ne sont pas réutilisables, et qu'il convient d'éliminer avant le tri compositionnel. Ce pré-tri peut s'effectuer, par exemple, par tamisage ou autre technique connue de l'homme du métier pour séparer des solides par leur taille, ou tout autre méthode de tri (tri par densité...).

Ce pré-tri est intéressant par exemple pour séparer les éléments chargés en tête de réacteur, dits éléments de la couche de garde, ou du lit de garde. Ces éléments sont souvent mélangés lors d'un déchargement avec les catalyseurs situés dans les couches inférieures. Ces éléments peuvent être des billes, des anneaux, des extrudés, des pastilles, contenant ou non des éléments catalytiques. Ils doivent être séparés avant que les catalyseurs ou adsorbants valorisables ne soient soumis au système de tri compositionnel avec détection LIBS.

Ce pré-tri est également intéressant dans le cas de catalyseurs de forme différente (par exemple cylindrique ou multilobée) ayant des diamètres différents, par exemple un mélange de 1,5mm et 3mm. Les techniques classiques de séparation mécanique, le tamisage par exemple, peuvent être mises en œuvre pour recouvrer chaque produit.

Il peut aussi arriver que dans un même réacteur soient chargés deux catalyseurs ou adsorbants de même forme et dimension mais de composition différente. Dans ce cas, l'invention permet de résoudre le problème posé par la récupération sélective de l'un ou plusieurs des composants du mélange.

### Les constituants du catalyseur

Le support des catalyseurs ou adsorbants est généralement à base (ou de préférence constitué) d'alumine ou de silice-alumine ou d'oxyde de titane, avec présence éventuelle de zéolite notamment pour les catalyseurs d'hydrocraquage, d'hydroconversion des distillats ou d'hydrotraitement.

Les catalyseurs contiennent des éléments constitutifs (métaux) qui confèrent au catalyseur les propriétés catalytiques requises pour traiter certains flux gazeux ou coupes pétrolières, tels que Ni, Co, Mo, W notamment pour les catalyseurs d'hydrotraitement et d'hydroconversion, tels que Pd, Pt, Ni, Cu, Cr, notamment dans des procédés d'hydrogénation, de déshydrogénation, d'isomérisation, de reformage, d'hydroconversion.

La phase active des catalyseurs d'hydrotraitement et d'hydrocraquage contient des sulfures de cobalt, de nickel, de molybdène ou de tungstène, lesquels sont supportés, généralement sur alumine. Le catalyseur neuf est initialement préparé avec des oxydes de ces métaux, qui sont ensuite sulfurés. On retrouve en fonction des objectifs de réaction en général les combinaisons CoMo, NiMo, NiCoMo ou NiW. La composition initiale en oxydes de nickel ou de cobalt étant en général comprise entre 2 et 10% poids sur le catalyseur et la composition en oxydes de molybdène ou tungstène étant voisine de 15 à 30% poids. Existe aussi le cas de catalyseurs non supportés, dits massiques, qui contiennent alors essentiellement des mélanges de sels de métaux dans leur composition, par exemple essentiellement à l'état activé des sulfures de Ni, Mo, W.

Le catalyseur contient ou non du phosphore ou du bore, qui sont des éléments de type dopant utilisés pour améliorer la performance des produits. Le réacteur d'hydrotraitement peut contenir différents catalyseurs de même forme et de composition différente en P et B et qui ne peuvent pas être réutilisés en tant que mélange après déchargement du réacteur. L'invention permet alors de trier des catalyseurs contenant du phosphore d'autres catalyseurs dépourvus de phosphore, ou ayant une teneur notablement plus faible en phosphore, ou un catalyseur contenant du bore d'autres catalyseurs dépourvus de bore, ou ayant une teneur notablement plus faible en bore.

Le catalyseur contient ou non du silicium, c'est le cas des catalyseurs ayant un support contenant de la silice-alumine. Celle-ci peut être de type amorphe ou cristallisée, auquel cas c'est en général une zéolite. Cette silice alumine amorphe ou cristallisée est ajoutée par exemple lorsque une fonction acide est désirée pour favoriser le craquage de molécules hydrocarbonées.

Les catalyseurs d'hydroconversion contiennent l'élément Si, à des teneurs comprises entre 1 et 45%, de préférence entre 2 et 40%, et de manière plus préférée entre 3 et 30%. Pour rappel, les catalyseurs d'hydrotraitement contiennent des teneurs en Si souvent inférieures à 2 voire 1%.

Certains catalyseurs d'hydrocraquage contiennent par exemple une phase NiMo ou NiW associée à un mélange de zéolite (ou silice alumine amorphe) et d'alumine. Ils sont en général chargés dans un réacteur situé en aval d'un autre réacteur contenant un ou des catalyseurs NiMo/alumine. Mais parfois ils sont chargés dans le même réacteur dans les couches inférieures de ce réacteur. Ils sont souvent chargés dans des lits séparés de ces réacteurs, mais dans certains cas, ils peuvent être dans le même lit. Au déchargement, pour différents types de raison, il peut y avoir un mélange entre ces deux types de catalyseur.

D'autres applications spécifiques d'hydrocraquage se rangent dans la catégorie du dewaxing ou d'hydrodewaxing, ou de déparaffinage catalytique. L'application vise à éliminer sélectivement les paraffines linéaires qui détériorent les propriétés de tenue à froid du gasoil, ou les caractéristiques des lubrifiants. Un exemple est montré dans le brevet US-4,347,121, de la société Chevron, qui décrit l'enchaînement d'un catalyseur de dewaxing avec un catalyseur d'hydrotraitement dit d'hydrofinishing. Le catalyseur de dewaxing est constitué de zéolite type ZSM5 et d'alumine, alors que le catalyseur de finishing contient du Pd et une silice alumine.

L'invention permet de séparer des mélanges de ces types de catalyseurs grâce à leur composition différente.

Un autre cas de mélange est illustré dans le brevet US 8,063,261, lequel mentionne l'utilisation d'alumine êta mélangée avec un catalyseur contenant du chrome dans l'application de déshydrogénation d'une charge hydrocarbonée de C3 ou C4 pour faire du propylène ou des butènes. Ces catalyseurs de déshydrogénation peuvent contenir du chrome à hauteur de 10 à 25% de Cr₂O₃. Ils peuvent être utilisés dans un procédé largement répandu commercialement appelé le procédé Catofin.

Pour des raisons de balance thermique de ce procédé, le catalyseur n'est pas utilisé pur, mais en mélange avec un produit inerte, non actif catalytiquement, typiquement une alumine, qui sert de diluant, par exemple à hauteur de 50% volume.

Lorsque le catalyseur est usé, il est déchargé avec son diluant.

Il est donc opportun de séparer le catalyseur contenant des métaux du diluant aluminique pour recycler de façon optimale le catalyseur.

### La détection par technique LIBS

Le LIBS est une technique d'analyse élémentaire, de plus en plus utilisée pour l'analyse compositionnelle directe des solides et des liquides. L'intérêt croissant pour cette technique provient de ses nombreux avantages incluant dans le cas présent une analyse possible insitu sans préparation particulière d'échantillons, une analyse rapide, une simplicité d'utilisation, une focalisation précise.

Le principe repose sur la focalisation d'une impulsion laser à la surface de l'échantillon. Cette focalisation d'impulsions laser de quelques nanosecondes, voire femto secondes, et d'une énergie de l'ordre de quelques dizaines de milli joules vers le point à analyser sur le matériau provoque la formation d'un micro-plasma. Ce micro-plasma se nourrit de la composition de la surface de l'échantillon, qui génère la vaporisation et l'ionisation de la matière, puis se refroidit au cours du temps.

La taille du point d'analyse est habituellement de l'ordre de quelques microns, voire la dizaine de microns. Les atomes et les ions du matériau présent dans le micro-plasma, émettent en se désexcitant des photons dont la longueur d'onde est caractéristique de l'élément chimique. Un spectromètre dans le domaine UV/visible collecte, éventuellement à l'aide d'une fibre optique, et traduit la lumière émise par le plasma. Les raies d'émission, générées par l'échantillon analysé, permettent d'identifier les éléments présents dans l'échantillon (analyse qualitative) et donc de connaître les espèces chimiques qui composaient l'échantillon. Leur intensité peut également être mesurée et comparée à celle mesurée pour une gamme d'échantillons de concentration connue, afin de mesurer la composition élémentaire de l'échantillon (analyse quantitative).

Dans le cas de la présente invention, une analyse quantitative permet de mesurer la teneur en élément constitutif sur le catalyseur ou adsorbant à séparer, par exemple la teneur en phosphore sur un catalyseur d'hydrotraitement.

La rapidité de réponse du LIBS est un avantage déterminant pour la productivité du tri avec des objets de petite taille comme les catalyseurs.

Les grains de catalyseur ou d'adsorbant sont soumis à un rayonnement laser. En retour, dans un analyseur, l'émission associée est analysée par spectroscopie à une longueur d'onde choisie pour permettre la détection de l'élément constitutif sur le catalyseur et de préférence pour mesurer l'intensité du (des) pic relatif à cet élément.

Pour ce faire, l'analyseur associé au LIBS traite le signal envoyé par le système de détection en le comparant à une valeur consigne significative de la présence de l'élément, et de préférence également significative du seuil de tri.

Le seuil de tri peut correspondre à 0% pds et dès lors la présence ou non de l'élément constitutif recherché est détectée et le tri s'effectue sur cette présence ou non.

Le seuil de tri peut correspondre à une teneur différente de 0 % pds, choisie par l'exploitant selon l'élément recherché et les contraintes/objectifs de l'exploitant. Le seuil de l'élément est choisi de façon à permettre la séparation de l'élément à partir du mélange.

Les longueurs d'onde associées au contaminant sont connues de l'homme du métier, ainsi que les interférences possibles avec d'autres éléments.

Le Na est assez émissif et des mesures de teneur sur les grains de catalyseur sont envisageables jusqu'à des teneurs aussi faibles que 0.1 % pds, ce qui permet de trier les catalyseurs en fonction d'une valeur seuil de tri (seuil de tri) choisie par l'exploitant dans l'intervalle compris entre 0.5 et 2 % pds en Na.

Par exemple, pour le phosphore, de nombreuses raies d'émission atomique située entre λ = 178 et 254 nm sont utilisées pour leur intensité importante et leur absence d'interférence avec les éléments constitutifs du catalyseur. Alternativement, les raies à une longueur d'onde de 214.920 ou 203.240 nm sont utilisées seules ou en combinaison avec n'importe quelle autre raie du spectre, constitutive de l'échantillon. Le tri pourra s'effectuer sur des catalyseurs contenant une valeur de seuil comprise entre 1 et 2 % poids de P.

Dans le cas du bore, qui peut être un élément constitutif de catalyseur d'hydrotraitement, les longueurs d'onde pour la détection pourront être de 249.772 et 249.677 nm. Le tri pourra s'effectuer sur des catalyseurs contenant une valeur de seuil comprise entre 0,5 et 2 % poids de B.

Dans le cas du chrome, la valeur seuil de tri choisie par l'exploitant dans l'intervalle peut être comprise entre 3 et 6 % pds Cr.

Dans le cas du silicium, pour répondre à un certain nombre de besoins de séparation de mélanges, le seuil de détection peut être établi de 1 à 3 % poids.

Dans le cas de l'aluminium, il peut se faire que les deux catalyseurs contiennent de l'aluminium, mais en concentration notablement différente, par exemple 40 % d'Al pour un catalyseur typique d'hydrotraitement, et 10 % pour un catalyseur zéolitique ou l'alumine ne sert que de lien de mise en forme. Dans ce cas, l'intensité du signal sert de critère discriminant et le seuil dans cet exemple serait établi à 20 ou 30 % pds. La raie d'Al est à 308.852 nm.

Il faut souligner que les seuils indiqués ci-dessus sont indicatifs et qu'il est naturellement possible d'avoir des valeurs plus élevées en fonction des contraintes de tri souhaitées par l'opérateur.

Afin d'améliorer la sensibilité de détection, il est possible de faire une analyse à plusieurs longueurs d'onde, en utilisant par exemple plusieurs spectromètres couplés sur le même faisceau lumineux et opérant en parallèle.

Le système de détection est préférentiellement ajusté de façon à ce que la profondeur de champ de l'analyse au-dessus de la surface des moyens de transport soit comprise entre 1/3 et 3 fois la plus petite dimension caractéristique du grain de catalyseur (le diamètre de l'extrudé dans le cas d'une particule sensiblement cylindrique, le diamètre du grain dans le cas d'une particule sphérique) pour permettre une détection ultrarapide de la composition des grains.

En pratique, l'analyseur permet de restituer la composition dans l'élément recherché avec un temps de réponse t inférieur à 50 ms, préférentiellement moins de 10 ms.

Le temps de passage d'un grain devant le système de détection est inférieur à 50 ms, et de préférence inférieur à 10 ms et peut aller jusqu'à moins de 1ms. Le nombre de grains détectés est d'au moins à 100 grains/s pour un temps de détection inférieur à 10 ms. Il peut atteindre 1000 grains/s pour un temps de d'analyse inférieur à 10 ms.

Dans une forme préférée de l'invention, les grains de catalyseur sont espacés, de préférence régulièrement, d'une distance correspondant de préférence à la plus grande dimension caractéristique des grains de catalyseur, soit la longueur moyenne des grains de catalyseur.

La mesure /détection est répétée à intervalle de temps.

Lorsque les grains sont espacés de leur longueur moyenne, la fréquence de mesure est égale à 1/2t, t étant le temps de passage du grain devant le système de détection. Lorsque les grains s'écoulent de façon jointive (les grains sont jointifs, leur espacement est égal à zéro), la fréquence est égale à 1/t.

D'une façon plus générale, les grains, de préférence des extrudés cylindriques ou multilobes, s'écoulent de façon à ce que leur espacement soit compris entre zéro et leur longueur, la fréquence de mesure est comprise entre 1/t et 1/2t, t étant le temps de passage du grain devant le système de détection LIBS.

L'espacement entre les grains est contrôlé par les moyens réglés en fonction du temps de détection du système de détection LIBS. L'espacement peut être avantageusement égal ou inférieur à la longueur moyenne des grains.

Par exemple ce sont les moyens de contrôle de l'alimentation (débit d'écoulement) des grains de catalyseurs sur le moyen de transport (bande de roulement, tapis vibrant, etc.) et de la vitesse dudit moyen.

D'une façon générale, les conditions du procédé sont réglées de façon à ce qu'il soit traité un nombre de grains supérieur à 20 grains par seconde pouvant aller jusqu'à 1000 grains par seconde et par détecteur LIBS et que le temps de réponse du système de détection LIBS soit inférieur à 50 ms, préférentiellement moins de 10 ms.

De manière optionnelle, la présence des grains peut être détectée à l'aide d'un autre dispositif optique, par exemple une caméra, de manière à ce que le déclenchement du laser du système LIBS soit synchronisé avec le passage du grain sous le faisceau du laser.

Dans un mode préféré de réalisation de l'invention, chaque grain de catalyseur est exposé au système de détection.

Dans un mode de réalisation préféré de l'invention, il est alors possible de traiter au moins 20 grains par seconde avec le même appareil de mesure, par exemple de 20-100 grains/s, préférentiellement plus de 100 grains par seconde, et jusqu'à 1000 grains par seconde ou plus.

Il est également possible d'avoir plusieurs systèmes de détection en parallèle pour opérer à des cadences élevées. Ainsi l'utilisation de 5 systèmes de détection en parallèle opérant à 200 grains/s permettra d'atteindre un débit de 1000 grains/s.

### La détermination de la teneur en élément constitutif

Le système LIBS mesure l'intensité du pic (des pics) relatif(s) au contaminant. L'exploitant choisit une valeur du seuil de tri comprise dans les valeurs indiquées précédemment, ou supérieurs, selon ses besoins en tri.

L'analyse spectrométrique à la ou les longueur(s) d'onde considérée(s) permet(ent) de remonter à la concentration massique de l'élément constitutif grâce à une calibration préalable

Selon la calibration que fait l'opérateur, la valeur consigne (correspondant à la présence de contaminant ou au seuil de tri) est entrée dans le système LIBS. Ce peut être est une teneur ou toute autre valeur reliée de manière significative à la teneur (ce peut être l'intensité du pic...), toutes ces techniques sont bien connues de l'homme du métier.

Après comparaison entre la valeur consigne et la valeur mesurée, le système agit pour évacuer le grain vers le stockage correspondant.

Il faut souligner que la présence d'un élément spécifique peut être corrélée à la teneur d'un autre élément. Cela constitue un avantage si l'un des deux éléments est plus facilement détectable en LIBS, du fait d'une ou plusieurs raies plus émissives, ou encore du fait d'interférence d'un autre élément perturbant le signal d'un contaminant mais pas l'autre. Cela peut également être un choix délibéré lié à l'utilisation d'un spectrophotomètre dont la bande spectrale comporte les raies d'un élément et pas l'autre.

### La séparation des grains

Lorsque le système de détection LIBS détecte l'élément constitutif dans un ou des grains et, de préférence détermine également l'état du grain par rapport au seuil de tri, il envoie un signal vers un moyen d'évacuation de ce grain à séparer de façon à séparer ledit grain dudit mélange.

Le système de détection est relié à un système de commande des moyens d'évacuation des grains contenant l'élément caractéristique recherché. Ces moyens sont localisés au niveau du moyen de transport (tapis roulant...), et le plus souvent ils sont situés à l'extrémité aval (sortie) du moyen de transport.

Ces moyens sont actionnés avec un décalage temporel fonction de leur distance avec le système de détection. Un exemple de moyen d'évacuation permettant de diriger les grains dans différentes directions est l'utilisation d'air comprimé. Le jet d'air comprimé ou l'absence de jet d'air comprimé permet de diriger le grain vers les différentes classes de tri, par exemple les grains contenant plus de X% d'un élément recherché évacués vers le haut alors que les grains contenant moins de X% de cet élément sont évacués vers le bas.

Par exemple, si le grain de catalyseur ou d'adsorbant contient l'élément recherché à une teneur supérieure au seuil de tri fixé par l'opérateur alors les moyens sont actionnés et permettent une déviation de l'écoulement du grain vers un réceptacle A. Si, au contraire, le catalyseur ou l'adsorbant contient le contaminant à une teneur inférieure ou égale au seuil de tri fixé par l'opérateur alors les moyens ne sont pas actionnés et le catalyseur s'écoule normalement vers un autre réceptacle B.

Dans le cas où l'on souhaite trier les catalyseurs ou adsorbants en fonction de plusieurs teneurs en différents éléments, on dispose avantageusement plusieurs systèmes de détection LIBS, chacun ayant une longueur d'onde adaptée à l'élément caractéristique à séparer. Les moyens d'évacuation sont adaptés en fonction.

On ne détaillera pas ici les multiples possibilités de tri, les tris peuvent être multiples en présence de plusieurs détecteurs LIBS. L'homme du métier adaptera le procédé selon l'invention en fonction de ses besoins.

Le procédé selon l'invention peut avantageusement être mis en œuvre avec le dispositif décrit ci-après à l'aide des figures. La figure 1 reprend de manière illustrative un mode de réalisation préféré. La figure 2 représente un tapis crénelé. La figure 3 montre des formes de grains.

C'est un dispositif de séparation d'au moins un catalyseur ou adsorbant d'un mélange homogène de catalyseurs et/ou d'adsorbants, lesdits catalyseurs ou adsorbants contenant au moins un élément constitutif et ayant été utilisés dans un procédé de traitement de gaz ou de charge hydrocarbonée, le dispositif de séparation et de tri permettant de séparer les catalyseurs ou adsorbants selon un seuil de tri correspondant à une teneur en l'élément constitutif recherché et défini par l'opérateur, le dispositif comprenant :
- une chaîne de transport du mélange de catalyseurs munie d'un moyen de transport, de moyen de contrôle du débit d'écoulement des grains sur ledit moyen et de moyen de contrôle de sa vitesse, lesdits moyens étant réglés de façon à ce que le temps de passage d'un grain devant le moyen de détection LIBS soit inférieur à 50ms, et de préférence inférieur à 10ms et que le nombre de grains triés soit d'au moins 20 grains/s, préférentiellement au moins 100 grain/s et de façon encore plus préférée d'au moins 200 grains/s,
- un système de détection LIBS comportant au moins un laser devant lequel les grains passent, le temps de détection étant inférieur à 50 ms, et de préférence inférieur à 10 ms et la longueur d'onde étant celle de l'élément constitutif recherché, ledit système détectant le grain chargé en ledit élément recherché et mesurant l'intensité du pic associé à ladite longueur d'onde,
- au moins un analyseur (8) et au moins un moyen de commande (10), ledit analyseur traitant le signal envoyé par le détecteur en le comparant à une valeur consigne significative du seuil de tri,
- au moins un moyen d'évacuation des grains à séparer, le(s)dit(s) moyen(s) étant actionné(s) à partir dudit moyen de commande selon la teneur en ledit élément constitutif recherché.

Des moyens classiques de convoyage (tube vibrant, élévateur vibrant, etc.) et de stockage de grains à trier puis de grains triés peuvent être utilisés à différents endroits du procédé de tri.

Avantageusement, le moyen de transport est une bande de roulement (ou tapis roulant). Ce peut aussi être une filière munie d'une vis sans fin creusée en son axe et munie d'au moins une ouverture adaptée à la détection et d'au moins une ouverture adaptée à la séparation des grains de catalyseur. Ce moyen de transport peut également être un tapis ou un tube vibrant.

De préférence, le moyen de transport est un tapis roulant et de préférence crénelé, la profondeur des créneaux étant comprise entre 0.5 et 3, et de préférence 0.7 et 1.3 fois la plus petite dimension caractéristique des grains, correspondant au diamètre dans le cas d'une sphère ou d'un extrudé.

De façon préférée, le réglage desdits moyens de la chaîne de transport est effectué de façon à ce que les grains s'écoulent avec un espacement compris entre zéro et leur plus grande dimension caractéristique, la fréquence de mesure est comprise entre 1/t et 1/2t, t étant le temps de passage du grain devant le système de détection LIBS.

Les grains sont de préférence des extrudés cylindriques, des trilobes ou multilobes.

Lorsque les grains sont espacés de leur longueur moyenne, la fréquence de mesure est égale à 1/2t, t étant le temps de passage du grain devant le système de détection. Lorsque les grains s'écoulent de façon jointive (les grains sont jointifs, leur espacement est égal à zéro), la fréquence est égale à 1/t.

Avantageusement, le système de détection est placé de façon à ce que la profondeur du champ d'analyse au-dessus de la surface des moyens de transport soit comprise entre 1/3 et 3 fois la plus petite dimension caractéristique du grain.

Avantageusement, le temps de passage d'un grain devant le système de détection LIBS est inférieur à 50 ms, et de préférence inférieur à 10 ms, les analyses étant répétées à intervalle de temps au plus égal au temps de passage du grain de plus petite dimension caractéristique.

### Description détaillée du procédé et du dispositif de séparation:

Les grains de catalyseur initialement stockés dans des fûts, des containers, des silos ou dans des sacs, puis sont généralement transférés dans une capacité tampon, par exemple une trémie, cette capacité alimentant une chaîne de transport qui comporte avantageusement une bande de déroulement comme un tapis roulant ou un tube ou couloir vibrant, et qui comporte des moyens de contrôle du débit d'écoulement des grains sur la bande de roulement.

Les grains transportés passent devant le système d'analyse LIBS permettant de déterminer si les grains ont une teneur inférieure/ égale ou supérieure (ou inférieure versus supérieure/égale) en élément recherché par rapport à un ou plusieurs seuils de tri défini par l'opérateur. Il peut y avoir un ou plusieurs seuils pour chaque élément selon les besoins de l'opérateur.

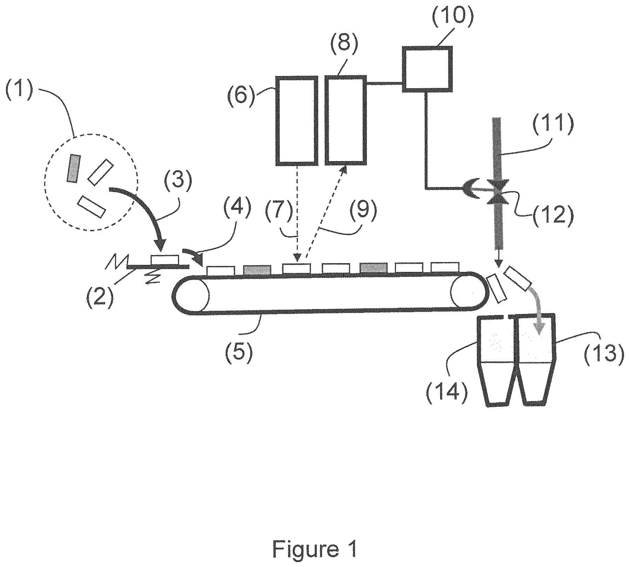

La figure 1 reprend de manière illustrative un mode de réalisation préféré mais non limitant.

Le mélange de grains de catalyseurs non trié (1) est amené sur un moyen (2) permettant de contrôler le débit d'écoulement des grains sur la bande de roulement (5). Les moyens d'amenée du mélange (3) peuvent être manuels (déchargement de sac par exemple) ou automatique (par décharge contrôlée d'un silo par exemple).

On décrit l'invention avec comme moyen de transport une bande de roulement mais la description est tout à fait transposable avec un autre moyen de transport, tel que par exemple un couloir vibrant.

Les moyens permettant de contrôler le débit sont des moyens bien connus de l'homme du métier, comme par exemple des plateaux vibrants inclinés, permettant l'étalement uniforme du grain de catalyseur et d'ajuster le débit d'écoulement du catalyseur sur le plateau vers la bande de roulement. L'homme du métier peut ainsi régler la distance entre deux grains sur la chaîne de transport et ajuster les fréquences de détection en conséquence ou bien, inversement, il peut régler la distance en fonction des fréquences de détection.

A titre d'exemple, sur la figure 1, nous avons représenté en (2) un plateau vibrant dans deux directions orthogonales. Avec ce type d'équipement, il est possible d'ajuster les fréquences de vibration pour moduler le débit de solide (4) vers la bande de roulement (5), ajuster la répartition entre les grains sur la section de passage et ainsi de contrôler l'espacement entre les grains en fonction de la vitesse de déplacement de la bande.

De préférence, de manière optimale, on règlera le dispositif pour que la distance entre les grains soit au maximum égale à la longueur moyenne des grains.

En sortie des moyens de contrôle de débit (2), les grains de catalyseur tombent sur la bande de roulement, qui peut être un simple tapis roulant plat, ou un tapis crénelé, tel que représenté sur la Figure 2.

Le tapis crénelé de la figure 2 présente un intérêt manifeste lorsqu'on trie notamment des extrudés en ce qu'il permet, de manière avantageuse, d'orienter les grains dans le sens de l'écoulement. L'écoulement des grains est ainsi plus régulier et espacé, ce qui favorise la détection, la séparation et améliore la productivité de l'installation. D'une façon générale, quelle que soit la forme du grain, le tapis crénelé évite que le grain bouge sous l'effet des vibrations du tapis et/ou impulsions du laser.

Dans le cas d'un tapis crénelé (20), une forme de créneau (21) ayant la forme d'un triangle équilatéral tel que représenté sur la figure 2 est avantageuse; la profondeur des créneaux sur le tapis est alors idéalement comprise entre 0.7 fois et 1.3 fois la plus grande dimension caractéristique des grains, le diamètre des grains de catalyseur dans le cas des billes, la longueur moyenne dans le cas d'extrudés cylindriques ou trilobes ou multilobes.

Les grains (22) sont positionnés sur le tapis (20). La vitesse d'avancement du tapis est ajustée afin d'optimiser la capacité de production d'une part, et la capacité du système à détecter le contaminant recherché dans les grains de catalyseur.

On cherchera préférentiellement à ce que le temps de passage d'un grain soit inférieur à 50ms, et étant de préférence inférieur à 10ms. Plus généralement, le temps de passage est le plus faible possible en accord avec le temps de réponse du système de détection.

Dans ces conditions, par exemple, pour un extrudé cylindrique de longueur égale à 5 mm, la vitesse est préférentiellement comprise entre 0.1 et 5 m/s.

Le système de détection comprend au moins un laser (6), au moins un spectromètre (ou analyseur) (8) et au moins un moyen de commande (10) de l'ouverture ou non d'au moins un moyen d'évacuation.

Un laser (6) émet un rayonnement focalisé sur la surface de l'échantillon (7). Suite à l'impulsion de l'ordre de la femto- à la nanoseconde entre le laser et l'échantillon, un plasma nourrit par la composition de l'échantillon est généré et renvoie en quelques millisecondes des longueurs d'onde propres à la composition de l'échantillon (9).

Les émissions de l'échantillon (9) sont analysées par un spectromètre (8) aux longueurs d'onde spécifiques du contaminant devant être détecté. De façon optionnelle, au moins une fibre optique est utilisée entre le plasma et le spectrophotomètre. Il est possible de travailler à plusieurs longueurs d'onde simultanément en positionnant sur le faisceau lumineux plusieurs spectromètres en parallèle qui travaillent simultanément à des longueurs d'onde différentes

Par exemple, pour mesurer la teneur en élément dans les catalyseurs d'hydrocraquage ou d'hydrotraitement, on utilisera la (ou les) longueur d'onde d'intensité importante.

En fonction des besoins, il est possible d'analyser l'ensemble des grains passant devant le système de détection (6-7-8-9) sur la bande de roulement (5), globalement ou individuellement, en utilisant plusieurs systèmes laser (6) en parallèle de façon à couvrir la largeur de la bande et en adaptant ou en découplant également le laser et le spectromètre (8) analysant les émissions (9).

Il est également possible de choisir d'opérer statistiquement, en analysant seulement une fraction de l'écoulement, ou de considérer un déplacement sur la largeur des lasers (6) et du (des) spectromètre(s) (8).

L'analyseur (le spectromètre) (8) est relié à des moyens de commande (10) permettant de convertir les résultats de l'analyse en action pour agir sur ledit moyen d'évacuation (ici la vanne 12).

Ces moyens sont par exemple constitués d'un ordinateur permettant de déclencher l'ouverture d'une vanne (12).

Ainsi, par exemple lorsque l'analyseur (8) détecte que le grain a une teneur supérieure à la valeur consigne (par exemple au seuil de tri), il envoie un signal au moyen de commande (10) qui actionne l'ouverture de la vanne (12).

Celle-ci est située sur une canalisation de fluide inerte (air par ex) sous une pression si possible supérieure à 5 bars (préférentiellement de l'air) pour favoriser la création d'un jet de gaz (d'air) suffisant pour évacuer le grain.

La vanne (12) s'ouvre pendant une durée déterminée puis se referme automatiquement. L'ouverture de la vanne permet de générer un jet à l'extrémité inférieure de la canalisation (11). Elle agit avec la canalisation comme une buse d'éjection de gaz (air). Avantageusement, la canalisation (11) est positionnée au bout du tapis roulant à une distance d'au plus 10 cm de l'extrémité du tapis (en fonction de la vitesse d'avancement du tapis, plus la vitesse de déroulement du tapis est faible et plus on rapproche la canalisation (11) de l'extrémité du tapis), à une hauteur au-dessus du tapis (5) comprise préférentiellement entre 2 et 10 fois la plus grande dimension caractéristique du grain de catalyseur (sa longueur dans le cas d'un extrudé).

Il est possible de positionner une ou plusieurs canalisations (11) en parallèle en fonction de la largeur de la bande de transport et de la forme de l'extrémité de la canalisation.

Dans le cas d'un embout de canalisation sphérique, le diamètre de l'embout de la canalisation est préférentiellement inférieur ou égal à la longueur moyenne des du grains.

Si le tapis permet le passage simultané dans la largeur de N particules simultanément, on peut positionner jusqu'à N tubes (11) en parallèles possédant chacun leur vanne, les vannes étant commandées simultanément ou séparément par le(s) moyen(s) de commande (10) en fonction du nombre d'analyseurs utilisés en parallèle.

Il est également possible de travailler avec une canalisation (11) unique mais dont l'extrémité de section rectangulaire pourrait créer un jet de gaz en pinceau, l'épaisseur du jet étant alors préférentiellement inférieure ou égal à la plus grande dimension caractéristique du grain.

Afin de prendre en compte la distance entre les moyens de détection et les moyens d'évacuation, le système de commande déclenche les cycles d'ouverture fermeture avec un retard qui est fonction de la distance à parcourir entre ces deux points. Par exemple, si la longueur de tapis entre la position focale de l'analyseur sur le tapis (9) et le(s) moyen(s) d'évacuation (vanne, buse d'injection d'air (12)) est de 3 m et que la vitesse de défilement sur le tapis est de 3 m/s, un retard d'une seconde est à prendre en compte, à corriger éventuellement en fonction des temps de réponse de l'analyseur (8), du moyen de commande (10) ou de la vanne (12)

Pour les besoins de l'invention et pour être sélectif, le cycle d'ouverture-fermeture de la vanne doit être rapide et cohérent avec le temps de passage des grains devant le détecteur. Préférentiellement, le temps de cycle ouverture fermeture n'excédera pas 1 et 5 fois le temps de passage du grain devant les moyens de détection, préférentiellement moins de 3 fois ce temps de passage moyen.

Ainsi, on choisira les technologies de vannes et d'actionneurs afin d'avoir un cycle ouverture fermeture compris entre 5 et 250 ms en fonction de la vitesse de défilement des moyens de transport (5).

Le jet de gaz (par ex air) créé pendant cette période a une vitesse au moins égale à 5 fois la vitesse terminale de chute du grain de catalyseur, préférentiellement 10 fois la vitesse terminale de chute (dans le cas d'un extrudé d'hydrotraitement, la vitesse terminale de chute est en général voisine de 5m/s et comprise entre 2 et 7 m/s

Lorsque l'actionneur déclenche l'ouverture de la vanne, le jet de gaz dévie la trajectoire du grain vers un réceptacle (14) qui récolte tous les grains dans la teneur en contaminant est supérieure au seuil de tri définie par l'opérateur.

Si l'actionneur n'est pas déclenché, alors, la trajectoire du grain sortant du tapis roulant décrit une parabole normale en fonction de la vitesse de déroulement du tapis et de la vitesse terminale de chute des particules. Le grain tombe alors dans un réceptacle (13) qui récolte tous les grains à éliminer ne contenant pas l'élément non désiré.

Ainsi les grains collectés en (13) constitueront un nouveau lot ayant par exemple une teneur en élément inférieure au seuil de tri défini par l'opérateur.

Par rapport à l'art antérieur, l'invention permet un tri rapide en fonction de la teneur en élément recherché d'au moins 20 à 100 objets (grains de catalyseur) /seconde, en général d'au moins 50 voire 100 objets/seconde, ou même au-delà de 100 objets/s et son utilisation autorise jusqu'à 1000 objets/seconde ou plus. La technique LIBS permet donc à elle seule une productivité importante.

Un autre avantage de l'invention est de pouvoir être mise en œuvre dans l'air ou tout autre atmosphère (n'interagissant pas sur la détection ou les grains).

### EXEMPLES

### Exemple 1 : Tri d'un lot de mélange de catalyseurs NiMoPB et NiMoP

On a mélangé deux catalyseurs de type NiMoPB et NiMoP.

40 grains de mélange ont été analysés par LIBS pour déterminer la présence ou l'absence de bore sur ces grains de catalyseurs. Un appareil LIBS de laboratoire (MobiLIBS III, IVEA) a été utilisé pour cet essai et est composé d'un laser (Brio, Quantel, Nd-YAG à 532 nm) et d'un spectromètre (Mechelle Andor, 200-900nm). Un seul tir du laser a été requis et chaque grain de catalyseur a été analysé dans les conditions suivantes : 12 mJ / spot de 140 µm / 3-5 ns de temps d'impulsion. Le doublet des raies du B à une longueur d'onde de 249.772 et 249.677 nm a été utilisé. Un signal proche de 2000 coups sur la raie à 249.772 nm et un peu plus faible sur la seconde raie est observé dans 43% des grains analysés.

Sur la faible quantité de matière récoltée au cours de ce tri, 100 mg de chacune des deux catégories formée par le tri a été minéralisée à froid pour un dosage par ICP/OES (ICP Spectro Arcos). La teneur moyenne en bore sur les grains générant un signal de 2000 coups sur la raie à 249.772 nm est de 1500 mg/kg alors que le bore n'est pas détecté dans le minéralisat formé par les grains n'ayant donné aucun signal de bore. Le tri effectué sur la base de la détection du B sur le doublet 249.772 et 249.677 nm est donc efficace pour discriminer les grains de catalyseurs contenant ou non du bore.

### Exemple 2 : Mélange de catalyseurs NiMoP et zéolitique, sélection par Si

De la même façon que l'exemple précédent, 40 grains de deux familles de catalyseurs ont été soumis à l'analyse LIBS. Il s'agit d'un catalyseur supporté sur alumine de type NiMoP. Le second catalyseur est un catalyseur zéolitique contenant essentiellement une zéolite ZSM5 et un liant aluminique, et il contient entre 30 et 40% Si.

Le système LIBS utilisé est équipé d'un laser (Centurion, 1064 nm, 100 Hz) et d'un spectromètre à forte fréquence d'acquisition (HR2000+, grating à 1200 traits/mm, résolution de 0.18 nm pour la zone 180-350 nm). Le tri a été effectué sur la base de la présence ou absence de la raie de Si à 280.308 nm, un signal de plus de 20000 coups étant visible lorsque le grain de catalyseur est un catalyseur contenant de la zéolite.

La technique LIBS permet aisément de différencier un lot de catalyseurs contenant un mélange de catalyseur NiMoP/alumine et zéolitique.

## Revendications

1. Procédé de séparation d'au moins un catalyseur ou adsorbant d'un mélange homogène en taille et/ou en forme de catalyseurs et/ou d'adsorbants, lesdits catalyseurs et/ou adsorbants se présentant sous la forme de billes ou d'extrudés cylindriques, trilobes ou multilobes, lesdits catalyseurs ou adsorbants ayant été utilisés dans un procédé de traitement de gaz ou de charge hydrocarbonée, procédé dans lequel les grains de catalyseurs ou adsorbants sont séparés selon un seuil de tri correspondant à une teneur en l'élément constitutif recherché et défini par l'exploitant, procédé dans lequel
- le catalyseur à séparer contient comme élément constitutif un élément non-métallique choisi dans le groupe formé par P, B, Si, Li, Na, K, Ca, Cl et/ou contient comme élément constitutif Cr, Cu, Al, Ti, Zn,
- les grains de catalyseur dudit mélange passent devant un système de détection LIBS qui détecte la longueur d'onde caractérisant ledit élément constitutif,
- l'analyseur associé au LIBS traite le signal envoyé par le système de détection en le comparant à une valeur consigne significative du seuil de tri,
- l'analyseur envoie un signal pour commander l'évacuation des grains selon sa teneur en ledit élément et il est obtenu au moins 2 lots : au moins un lot de catalyseurs contenant ledit élément à une teneur supérieure au seuil de tri fixé par l'opérateur, et au moins un lot de catalyseurs contenant ledit élément à une teneur inférieure au seuil de tri fixé par l'opérateur,
- et l'un au moins des lots de catalyseurs contenant ledit élément à une teneur inférieure au seuil de tri fixé par l'opérateur est recyclé dans le procédé de traitement de gaz ou de charge hydrocarbonée.

2. Procédé selon la revendication 1 dans lequel le tri s'effectue dès lors la présence dudit élément sur lesdits grains de catalyseurs ou adsorbants

3. Procédé selon l'une des revendications précédentes, dans lequel le procédé de traitement de charge hydrocarbonée est choisi dans le groupe formé par l'hydrotraitement, l'hydrocraquage, la déshydrogénation, l'hydroconversion de distillats, l'hydrogénation, l'isomérisation, le reformage et le traitement de gaz est choisi dans le groupe formé par le procédé Claus et traitements de gaz de queue.

4. Procédé selon l'une des revendications précédentes, dans lequel les catalyseurs sont des catalyseurs usés d'hydrotraitement et/ou d'hydrocraquage, dont le support est constitué d'alumine ou de silice-alumine.

5. Procédé selon l'une des revendications précédentes, dans lequel le nombre de grains détectés/analysés étant d'au moins 100 par seconde pour un temps de détection inférieur à 10 ms.

6. Procédé selon l'une des revendications précédentes, dans lequel l'espacement entre les grains est égal ou inférieur à la longueur moyenne des grains, ladite longueur des grains représentant soit 2 à 5 fois le diamètre desdits grains lorsque lesdits catalyseurs et/ou adsorbants se présentent sous la forme d'extrudés, ledit diamètre des extrudés étant compris entre 0,5 et 3 mm, soit ladite longueur est comprise entre 0,5 et 10 mm lorsque lesdits catalyseurs et/ou adsorbants se présentent sous la forme de billes.

7. Procédé selon l'une des revendications précédentes, dans lequel le seuil de tri pour P est compris entre 1 et 2 % poids de P.

8. Procédé selon l'une des revendications précédentes, dans lequel le seuil de tri pour B est compris entre 0,5 et 2 % poids de B.

9. Procédé selon l'une des revendications précédentes, dans lequel le seuil de tri pour Cr est compris entre 3 et 6 % pds Cr.

10. Procédé selon l'une des revendications précédentes, dans lequel le seuil de tri pour Si est compris entre 1 à 3 % poids.

11. Procédé selon l'une des revendications précédentes, dans lequel le seuil de tri pour Na est compris entre 0,5 à 2 % poids.

## Patentansprüche

1. Verfahren zur Trennung mindestens eines Katalysators oder Adsorbens eines homogenen Gemisches hinsichtlich Größe und/oder Form von Katalysatoren und/oder Adsorbens, wobei die Katalysatoren und/oder Adsorbens in Form von Kugeln oder zylindrischen Extrudaten, dreilappig oder mehrlappig, vorhanden sind, wobei die Katalysatoren oder Adsorbens in einem Verfahren zur Behandlung von Gas oder einer Kohlenwasserstoff-Charge verwendet wurden, wobei bei dem Verfahren die Katalysator- oder Adsorbenskörner nach einem Sortiergrenzwert getrennt werden, der einem gewünschten und vom Bediener definierten Gehalt an dem Bestandteil entspricht, wobei bei dem Verfahren:
- der zu trennende Katalysator als Bestandteil ein nicht metallisches Element enthält, das in der Gruppe ausgewählt ist, die von P, B, Si, Li, Na, K, Ca, Cl gebildet ist und/oder als Bestandteil Cr, Cu, Al, Ti, Zn enthält,
- die Katalysatorkörner des Gemisches ein Erfassungssystem LIBS passieren, das die Wellenlänge erfasst, die den Bestandteil kennzeichnet,
- der dem LIBS zugeordnete Analysator das von dem Erfassungssystem gesandte Signal verarbeitet, wobei es diese mit einem für den Sortiergrenzwert signifikanten Sollwert vergleicht,
- der Analysator ein Signal sendet, um die Beseitigung der Körner nach dem Gehalt an dem Bestandteil zu steuern, und mindestens 2 Chargen erhalten werden: mindestens eine Charge von Katalysatoren, die den Bestandteil in einem Gehalt über dem vom Bediener festgesetzten Sortiergrenzwert enthält, und mindestens eine Charge von Katalysatoren, die den Bestandteil in einem Gehalt unter dem vom Bediener festgesetzten Sortiergrenzwert enthält,
- und mindestens eine der Katalysator-Chargen, die den Bestandteil in einem Gehalt unter dem vom Bediener festgesetzten Sortiergrenzwert enthält, in dem Verfahren zur Bearbeitung von Gas oder einer Kohlenwasserstoff-Fraktion rezykliert wird.

2. Verfahren nach Anspruch 1, bei dem das Sortieren erfolgt, sobald der Bestandteil auf den Katalysator- oder Adsorbenskörnern vorhanden ist.

3. Verfahren nach einem der vorhergehenden Ansprüche, wobei das Verfahren zur Behandlung einer Kohlenwasserstoff-Fraktion in der Gruppe ausgewählt ist, die von der Hydrobehandlung, dem Hydrocracken, der Dehydrierung, der Hydrierumwandlung von Destillaten, der Hydrierung, der Isomerisation, der Reformierung gebildet ist, und die Gasbehandlung in der Gruppe ausgewählt ist, die von dem Claus-Verfahren und Endgasbehandlungen gebildet ist.

4. Verfahren nach einem der vorhergehenden Ansprüche, bei dem die Katalysatoren gebrauchte Katalysatoren zur Hydrobehandlung und/oder zum Hydrocracken sind, deren Träger von Aluminiumoxid oder Silizium-Aluminiumoxid gebildet ist.

5. Verfahren nach einem der vorhergehenden Ansprüche, bei dem die Anzahl von erfassten/analysierten Körnern mindestens 100 pro Sekund bei einer Erfassungszeit unter 10 ms beträgt.

6. Verfahren nach einem der vorhergehenden Ansprüche, bei dem der Abstand zwischen den Körnern gleich oder kleiner als die durchschnittliche Länge der Körner ist, wobei die Länge der Körner entweder 2- bis 5-mal den Durchmesser der Körner ausmacht, wenn die Katalysatoren und/oder Adsorbens in Form von Extrudaten vorhanden sind, wobei der Durchmesser der Extrudate zwischen 0,5 und 3 mm beträgt, oder die Länge zwischen 0,5 und 10 mm beträgt, wenn die Katalysatoren und/oder Adsorbens in Form von Kugeln vorhanden sind.

7. Verfahren nach einem der vorhergehenden Ansprüche, bei dem der Sortiergrenzwert für P zwischen 1 und 2 Gew.-% von P beträgt.

8. Verfahren nach einem der vorhergehenden Ansprüche, bei dem der Sortiergrenzwert für B zwischen 0,5 und 2 Gew.-% von B beträgt.

9. Verfahren nach einem der vorhergehenden Ansprüche, bei dem der Sortiergrenzwert für Cr zwischen 3 und 6 Gew.-% von Cr beträgt.

10. Verfahren nach einem der vorhergehenden Ansprüche, bei dem der Sortiergrenzwert für Si zwischen 1 und 3 Gew.-% beträgt.

11. Verfahren nach einem der vorhergehenden Ansprüche, bei dem der Sortiergrenzwert für Na zwischen 0,5 und 2 Gew.-% beträgt.

## Claims

1. Method for separation of at least one catalyst or adsorbent from a homogeneous mixture in size and/or a in shape of catalysts and/or adsorbents, said catalyst and/or adsorbent being in the form of cylindrical extrudates, balls, trilobes, or multilobes ,with said catalysts or adsorbents having been used in a method for treatment of gas or hydrocarbon feedstock, method in which the catalyst grains or adsorbents are separated according to a sorting threshold corresponding to a content of the constituent element that is sought and defined by the user, method in which:
- The catalyst to be separated contains as a constituent element a non-metal element selected from the group that is formed by P, B, Si, Li, Na, K, Ca, Cl and/or that contains as a constituent element Cr, Cu, Al, Ti, Zn,
- The catalyst grains of said mixture run past an LIBS detection system that detects the wavelength that is characteristic of said constituent element,
- The analyzing device associated with LIBS processes the signal sent by the detection system by comparing it to a set-point value that indicates the sorting threshold,
- The analyzing device sends a signal to order the evacuation of grains according to the content thereof in said element, and at least 2 batches are obtained: at least one batch of catalysts containing said element at a level above the sorting threshold set by the operator and at least one batch of catalysts containing said element at a level below the sorting threshold set by the operator,
- And at least one of the batches of catalysts that are lightly loaded with said element is recycled into the gas or hydrocarbon batch treatment method after possible regeneration.

2. Method according to Claim 1, in which the sorting is carried out therefore the presence of the element on the catalyst grains or adsorbent.

3. Method according to one of the preceding claims, in which the hydrocarbon feedstock treatment method is selected from the group that is formed by hydrotreatment, hydrocracking, dehydrogenation, hydroconversion of distillates, hydrogenation, isomerization, reforming, and the gas treatment is selected from the group that is formed by the Claus method and tail gas treatments.

4. Method according to one of the preceding claims, in which the catalysts are spent hydrotreatment and/or hydrocracking catalysts, whose substrate consists of alumina or silica-alumina.

5. Method according to one of the preceding claims, in which the number of grains detected/analyzed being at least 100 per second for a detection time of less than 10 ms.

6. Method according to one of the preceding claims, in which the spacing between the grains is less than or equal to the mean length of the grains, said length of the grains being equal to 2 to 5 times the diameter of said grains when said catalysts or adsorbents are in the form of extrudates, or between 0.5 and 3 mm when said catalysts or adsorbents are in the form of beads .

7. Method according to one of the preceding claims, in which the sorting threshold for P is between 1 and 2 % by weight of P.

8. Method according to one of the preceding claims, in which the sorting threshold for B is between 0.5 and 2 % by weight of B.

9. Method according to one of the preceding claims, in which the sorting threshold for Cr is between 3 and 6 % by weight of Cr.

10. Method according to one of the preceding claims, in which the sorting threshold for Si is between 1 and 3 % by weight.

11. Method according to one of the preceding claims, in which the sorting threshold for Na is between 0.5 to 2 % by weight.
